# EUROPÄISCHE PATENTSCHRIFT

(11) **EP 0 995 139 B1**
(45) Veröffentlichungstag und Bekanntmachung des Hinweises auf die Patenterteilung: **05.06.2002**
(21) Anmeldenummer: 98931875.3
(22) Anmeldetag: 16.07.1998
(51) Int. Cl.: G02B 6/38, C09J 167/06

(54) **VERFAHREN ZUM BEFESTIGEN EINES LICHTWELLENLEITERKABELS IN EINEM VERBINDER FÜR EINE STECKBARE FASERVERBINDUNG**
METHOD FOR FIXING AN OPTICAL FIBER CABLE IN A CONNECTOR FOR A CONNECTABLE OPTICAL FIBER CONNECTION
PROCEDE POUR FIXER UN CABLE A FIBRES OPTIQUES DANS UN CONNECTEUR POUR CREER UNE CONNEXION DE FIBRES ENFICHABLE

(30) Priorität: 17.07.1997 CH 175797
(43) Veröffentlichungstag der Anmeldung: 26.04.2000
(73) Patentinhaber: HUBER & SUHNER AG, 9100 Herisau (CH)
(72) Erfinder: GREUB, Daniel, CH-9000 St. Gallen (CH); KOCH, Beat, CH-9205 Waldkirch (CH); STEPHAN, Kurt, CH-9100 Herisau (CH); FANKHAUSER, Urs, CH-9535 Wilen bei Wil (CH)
(74) Vertreter: Isler & Pedrazzini AG
(86) Internationale Anmeldenummer: CH9800311
(87) Internationale Veröffentlichungsnummer: WO9904299

(56) Entgegenhaltungen:
- EP-A- 0 227 002
- EP-A- 0 273 415
- EP-A- 0 434 212
- DE-A- 3 429 626
- DE-A- 19 512 427
- DE-A- 19 528 351
- US-A- 4 154 774
- US-A- 4 383 049
- US-A- 4 446 257
- US-A- 4 600 738
- US-A- 4 790 622

## Beschreibung

### TECHNISCHES GEBIET

Die vorliegende Erfindung bezieht sich auf das Gebiet der Lichtwellenleitertechnik. Sie betrifft ein Verfahren zum Befestigen eines Lichtwellenleiters in einem Verbinder für eine optische Steckverbindung gemäss dem Oberbegriff des Anspruchs 1.

Ein solches Verfahren ist z.B. aus der Druckschrift US-A-4,790,622 bekannt.

Die Anmeldung betrifft weiterhin einen Klebstoff für den Einsatz in einem solchen Verfahren.

### STAND DER TECHNIK

Zur Verklebung von optischen Lichtwellenleitern, insbesondere Lichtwellenleiterkabeln, mit entsprechenden Verbindern werden in der Regel 2-komponentige Epoxidklebstoffe verwendet. Je nach Fertigungsart benutzt man Klebstoffe dieser Art mit einer langen "Topfzeit". Um unter diesen Voraussetzungen eine vernünftige Taktzeit bei der Herstellung der Klebeverbindung zu erzielen, muss unter Anwendung von Wärme nachvernetzt werden. Es ist aber auch denkbar, 2-komponentige Klebstoffe mit kurzer Topfzeit zu verwenden, die bei Raumtemperatur innerhalb von 10-20 Minuten die gewünschte Festigkeit erreichen. Diese 2-komponentigen Klebstoffe müssen allerdings mehrmals am Tag vorbereitet, d.h. aus mehreren getrennt bereit gestellten Komponenten angemischt, werden.

Neben diesen Epoxidklebstoffen wurden in den letzten Jahren Klebstoffe auf Acrylatbasis entwickelt und zunehmend in der Konfektionierung "vor Ort", also ausserhalb der Fertigungsstätte, d.h. am Montageort, eingesetzt. Diese Acrylatklebstoffe sind einfacher zu handhaben. Obwohl sie ebenfalls 2-komponentig ausgeführt sind, haben sie den Vorteil sehr kurzer Reaktionszeiten. Die Lagerstabilität der Produkte bei Temperaturen oberhalb 40°C ist jedoch sehr beschränkt. Da beim LKW-Transport im Sommer nach Standzeiten von 2 Stunden in voller Sonne leicht Temperaturen von bis zu 60°C im Stückgut unter der Plane erreicht werden, ist die Anwendung derartiger hochreaktiver Klebesysteme deutlich eingeschränkt.

So ist es beispielsweise aus einem anderen Patent der Anmelderin (CH-A5 687 621) bekannt, einen Lichtwellenleiter in der Ferrule eines optischen Steckverbinders mittels eines aus zwei Komponenten bestehenden Klebstoffes einzukleben. Die eine der beiden Komponenten, die jeweils aus ungesättigten Verbindungen, die in mono- und/oder multifunktionellen Acrylaten gelöst sind, bestehen, ist dazu in der Bohrung der Ferrule untergebracht. Mit der anderen Komponente wird der Lichtwellenleiter vor dem Einführen in die Bohrung benetzt. Beim Hineinstecken wird dann innerhalb weniger Minuten durch eine Grenzschichtreaktion eine Polymerisation bewirkt. Die vorgefüllten Ferrulen bedingen allerdings eine spezielle Lagerhaltung. Darüber hinaus kann unter Umständen die Komponente in der Ferrule unter ungünstigen Lagerbedingungen unbrauchbar werden, wodurch die Ferrule selbst, die wegen der verwendeten hochpräzisen Keramik den wertvollsten Bestandteil des Steckverbinders darstellt, unbrauchbar wird.

Bekannt sind weiterhin auch Verbinder/Stecker, die mit einem Schmelzklebstoff verfüllt sind. Diese Verbinder werden vor Ort in einem Heizgerät erwärmt und im heissen Zustand wird der Lichtwellenleiter eingeführt. Nach dem Erkalten kann dann weitergearbeitet werden. Nachteilig ist bei einem solchen Klebstoffsystem, dass der im kalten Zustand feste Klebstoff bei erhöhten Temperaturen wieder erweicht und wegen dieser beschränkten Temperaturbeständigkeit nicht überall eingesetzt werden kann.

Eine ähnliche Lösung, bei der anstelle eines Schmelzklebers ein fester mehrkomponentiger Reaktionskleber verwendet wird, und bei welcher der Kleber durch Erhitzen verflüssigt und damit eine Härtungsreaktion in Gang gesetzt wird, ist aus der eingangs genannten US-A-4,790,622 bekannt. Nachteilig ist dabei, dass der Verbinder insgesamt nicht mehr brauchbar ist, wenn der darin vorhandene Reaktionskleber seine Lagerzeit überschritten hat oder durch äussere Einflüsse degradiert ist.

Ein Kompositklebstoff für optische und optoelektronische Anwendungen wird in der DE-A1-195 12 427 beschrieben. Der Klebstoff liegt in Form einer flüssigen Dispersion vor und ist daher für den Ausseneinsatz weniger geeignet.

Eine andere, auf Klebstoffe vollkommen verzichtende Lösung wäre die mechanische Fixierung, bei welcher durch mechanische Mittel seitlich auf die im Verbinder sitzende Faser gedrückt wird. Da ein hoher Seitendruck nötig wäre, um die Faser unbeweglich zu fixieren, könnte es nach längerer Zeit zu Verformungen der Faser kommen. Eine solche Verformung würde zu Leistungsverlusten bzw. zum vollständigen Versagen des Lichtleiters führen.

### DARSTELLUNG DER ERFINDUNG

Es ist daher Aufgabe der Erfindung, ein Verfahren zum Befestigen eines Lichtwellenleiters in einem Verbinder anzugeben, welches die Nachteile bekannter Verfahren vermeidet und insbesondere leicht und unkompliziert am Montageort durchgeführt werden kann, und sich durch eine sehr gute Lagerfähigkeit und geringe Temperaturempfindlichkeit der verwendeten Mittel auszeichnet.

Die Aufgabe wird durch die Gesamtheit der Merkmale des Anspruchs 1 gelöst.

Durch die erfindungsgemässe Verwendung eines festen Reaktionsklebstoffs, der erst nach Ueberführung in einen flüssigen (aufgeschmolzenen oder gelösten) Zustand reagiert und dann in einen duroplastischen Zustand übergeht, entfällt ein Anmischen des Klebstoffs, und ist die fertig ausgehärtete (vernetzte) Klebeverbindung gegen spätere Temperaturerhöhungen vergleichsweise unempfindlich. Besonders vorteilhaft ist es jedoch, dass der feste Reaktionsklebstoff vor seiner Anwendung besonders gut und lange gelagert werden kann, ohne seine Klebefähigkeit zu verlieren. Der pulverförmige Klebstoff hat die besondere Eigenschaft, dass er rieselfähig und sehr leicht beweglich ist, solange der Klebstoff voll funktionsfähig ist, dass er aber zu einer festen Masse zusammengebacken bzw. -gesintert ist, wenn er seine Klebefähigkeit verloren hat. Die Verwendung eines pulverförmigen Klebstoffs hat insbesondere auch den Vorteil, dass durch einfaches Schütteln des Klebstoffbehälters leicht festgestellt werden kann, ob der Klebstoff noch brauchbar ist, was bei anderen Klebstoffsystemen nicht möglich ist.

Eine erste bevorzugte Ausführungsform des Verfahrens nach der Erfindung zeichnet sich dadurch aus, dass der Aufnahmekörper auf eine Temperatur gebracht und gehalten wird, welche grösser oder gleich der Schmelztemperatur des Klebstoffs ist, und dass der Lichtwellenleiter mit den anhaftenden Partikeln in die Bohrung des aufgeheizten Aufnahmekörpers eingeführt wird. Dies hat den besonderen Vorteil, dass zum Durchführen der Verklebung keine weiteren zusätzlichen chemischen Mittel bereitgehalten werden müssen, sondern die Klebereaktion durch eine einfache (kontrollierte) Temperaturerhöhung in Gang gesetzt wird.

Das Anhaften des pulverförmigen Klebstoffs an dem Lichtwellenleiter, das.wahrscheinlich auf elektrostatische Anziehungskräfte oder Oberflächenkräfte zurückzuführen ist, führt überraschenderweise dazu, dass genau die richtig dosierte Menge von Klebstoff (wenige mg) in die Bohrung und damit zur Klebestelle transferiert wird. Hierdurch werden störende Klebstoffüberschüsse an der Klebestelle automatisch und sicher vermieden.

Eine weitere bevorzugte Ausführungsform des Verfahrens nach der Erfindung ist dadurch' gekennzeichnet, dass der Klebstoff durch Hinzufügen eines Lösungsmittels in den flüssigen Zustand überführt wird, dass der Lichtwellenleiter mit seinem einen Ende zunächst in das Lösungsmittel eingetaucht wird, und dass der Lichtwellenleiter mit seinem einen Ende anschliessend in den pulverförmigen Klebstoff eingetaucht wird. Durch das Lösungsmittel gehen die reaktionsfähigen Komponenten des Reaktionsklebers in Lösung und beginnen, miteinander zu reagieren. Eine spezielle Dosierung des Lösungsmittels ist dabei nicht nötig. In diesem Fall muss zwar das Lösungsmittel zusätzlich bereit gehalten und appliziert werden; dafür kann jedoch auf eine Aufheizeinrichtung verzichtet werden.

Eine besonders gute und stabile Verklebung ergibt sich, wenn gemäss einer weiteren bevorzugten Ausführungsform des erfindungsgemässen Verfahrens ein Aufnahmekörper mit einer Bohrung verwendet wird, deren Innendurchmesser nur wenig, vorzugsweise 0,002 bis 0,008 mm, grösser ist, als der Aussendurchmesser des Lichtwellenleiters. Beim Einschieben des Lichtwellenleiters in die Bohrung wird- wenn der Klebstoff durch Erwärmung in den flüssigen Zustand überführt wird - der anhaftende pulverförmige Klebstoff aufgrund der geringen Durchmessertoleranzen von dem Lichtwellenleiter abgestreift, kommt mit dem erhitzten Aufnahmekörper in Berührung, schmilzt auf, und wird dann als (relativ niedrigviskose) Flüssigkeit in den Spalt zwischen Lichtwellenleiter und Aufnahmekörper mit hineingezogen um dort anschliessend auszuhärten. Zugleich ergibt sich vor dem Aushärten eine gute Führung des Lichtwellenleiters in der Bohrung. In der trichterförmigen Oeffnung der Bohrung können sich dabei überschüssige abgestreifte Partikel des Klebstoffs ohne die Gefahr eines Abfallens sammeln, und bilden ein den Lichtwellenleiter umgebendes Schmelzbad, aus welchem beim Einführen des Lichtwellenleiters in die Bohrung stets genügend flüssiger Klebstoff in den Spalt hinein mitgeführt werden kann.

Eine weitere bevorzugte Ausgestaltung des erfindungsgemässen Verfahrens ist dadurch gekennzeichnet, dass der verwendete Klebstoff ein zweikomponentiger Reaktionsklebstoff ist, und dass der Klebstoff im wesentlichen aus einem festen, vorzugsweise einem kristallinen, Harz besteht, dem ein festes Hilfsmittel für die Vernetzung zugefügt ist.

Eine bevorzugte Ausführungsform des Klebstoffs zeichnet sich dadurch aus, dass das feste Harz aus der Gruppe der ungesättigten Polyesterharze, der festen Acrylatharze, der Methacrylatfestharze und der Epoxidfestharze ausgewählt ist, und als Vernetzungs-Hilfsmittel für die Polyester-, Acrylatund Methacrylatharze ein Peroxid, bzw. für die Epoxidharze ein Aminaddukt verwendet wird.

Eine bevorzugte Weiterbildung dieser Ausführungsform ist dadurch gekennzeichnet, dass als Peroxid ein (1.1-Di(tert.Butylperoxyd)3.3.5-Trimethylcyclohexan 40% auf Kreide) verwendet wird, dass der Klebstoff in Pulverform vorliegt, dass dem pulverförmigen Klebstoff ein Trennmittel, vorzugsweise in Form einer kolloidalen Kieselsäure, zugemischt ist, und dass dem pulverförmigen Klebstoff zur besseren Ueberwachung des Klebevorgangs ein Pigment, vorzugsweise ein rotes Eisenoxyd, zugemischt ist. Das Trennmittel erhält die Rieselfähigkeit und verhindert eine Reaktion der Komponenten vor dem Aufschmelzen. Das Pigment erlaubt es, den Aufschmelz- und Reaktionsvorgang optisch leicht zu verfolgen.

In einer ersten Weiterbildung wird als ungesättigtes Polyesterharz ein Polyesterharz auf Terephtalsäurebasis verwendet, und ist der Klebstoff zu ca. 89% aus dem Polyesterharz, zu ca. 6% aus 1.1-Di(tert.Butylperoxyd)3.3.5-Trimethylcyclohexan 40% auf Kreide, zu ca. 3,5% aus kolloidaler Kieselsäure und zu ca. 1,5% aus Eisenoxyd zusammengesetzt.

In einer zweiten, alternativen Weiterbildung wird als festes Harz eine Mischung aus Methacrylamid und Bisphenol A-Dimethacrylat verwendet, und ist der Klebstoff zu ca. 80% aus Methacrylat, zu ca. 9% aus Bisphenol A-Dimethacrylat, zu ca. 6% aus 1.1-Di(tert.Butylperoxyd)3.3.5-Trimethylcyclohexan 40% auf Kreide, zu ca. 3,5% aus kolloidaler Kieselsäure und zu ca. 1,5% aus Eisenoxyd zusammengesetzt.

In einer dritten, alternativen Weiterbildung wird als festes Harz ein Epoxidharz verwendet, und ist der Klebstoff zu 50-70% aus dem Epoxidharz, zu 20-40% aus einem Epoxid-Addukt, zu 5-10% aus kolloidaler Kieselsäure und zu ca. 1,5% aus Eisenoxyd zusammengesetzt.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1a-e: verschiedene vorbereitende Schritte beim Herstellen einer Klebeverbindung zwischen einem Lichtwellenleiter und einem Verbinder gemäss einem ersten bevorzugten Ausführungsbeispiel der Erfindung;
- Fig. 2: in einer gegenüber Fig. 1 vergrösserten Darstellung das Einführen des gemäss Fig. 1e mit dem pulverförmigen Klebstoff besetzten Lichtwellenleiters in die Bohrung des vorgeheizten Aufnahmekörpers;
- Fig. 3: den nach der vollständigem Einführung des Lichtwellenleiters gemäss Fig. 2 erreichten Endzustand der Klebeverbindung;
- Fig. 4a-d: die zu Fig. 1a-e vergleichbaren Vorstufen für ein Klebeverfahren gemäss einem zweiten bevorzugten Ausführungsbeispiel der Erfindung;
- Fig. 5: den zu Fig. 2 vergleichbaren Vorgang des Einführens nach den vorbereitenden Schritten gemäss Fig. 4a-d; und
- Fig. 6: den zu Fig. 3 vergleichbaren Endzustand der Klebverbindung nach dem Einführen gemäss Fig. 5.

### WEGE ZUR AUSFÜHRUNG DER ERFINDUNG

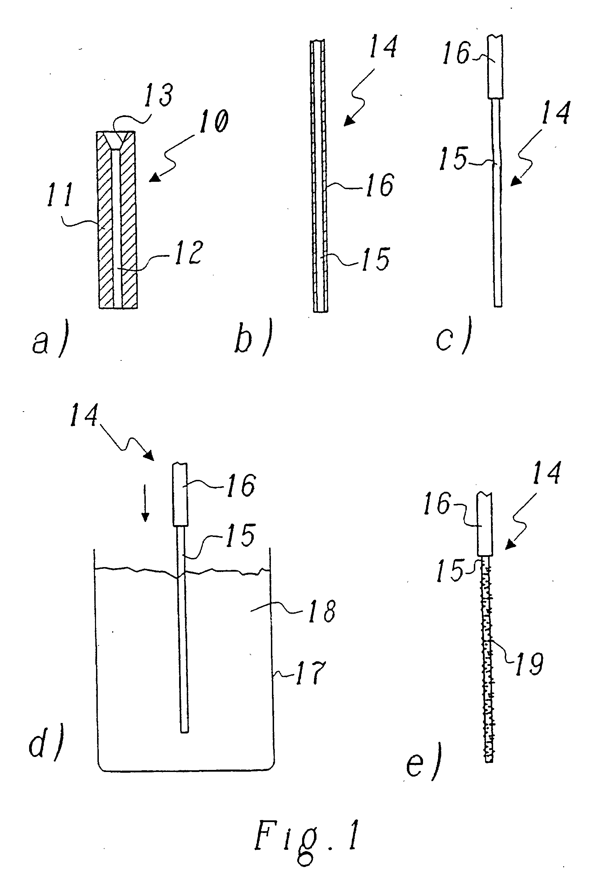

In Fig. 1a-e sind verschiedene vorbereitende Schritte beim Herstellen einer Klebeverbindung zwischen einer Lichtwellenleiter und einem Verbinder gemäss einem ersten bevorzugten Ausführungsbeispiel des erfindungsgemässen Verfahrens dargestellt, bei welchem der Klebstoff durch Erwärmen in einen flüssigen reaktiven Zustand überführt wird. Ausgegangen wird gemäss Fig. 1a von einem zylindrischen Aufnahmekörper (einer Ferrule) 11 eines Verbinders 10, der (die) üblicherweise aus einer Präzisionskeramik hergestellt ist und eine konzentrische Bohrung 12 aufweist, die am einen Ende in eine trichterförmige Oeffnung 13 übergeht. Die hochgenaue Bohrung 12 ist in den Figuren zur besseren Sichtbarmachung des Verklebungsvorgangs mit einem übertrieben grossen Innendurchmesser gezeichnet. In den Aufnahmekörper 11 soll mit dem erfindungsgemässen Verfahren ein Lichtwellenleiter 14 eingeklebt werden, der üblicherweise mit einer schützenden Umhüllung 16 versehen ist und den zentralen Teil eines optischen Kabels 14 bildet (Fig. 1b).

Zur Vorbereitung der Verklebung wird zunächst gemäss Fig. 1c die Umhüllung 16 auf einer vorbestimmten Länge des optischen Kabels 14 vom Lichtwellenleiter 15 entfernt, so dass der Lichtwellenleiter auf dieser Länge frei liegt. Die Länge, auf welcher der Lichtwellenleiter 15 freigelegt wird, beträgt beispielsweise 5 cm. Anschliessend wird der freigelegte Lichtwellenleiter 15 zur Sicherstellung einer sauberen Klebefläche gereinigt. Dies geschieht vorzugsweise mechanisch mit einem fusselfreien Vlies, mit dem die Oberfläche des Lichtwellenleiters 15 abgerieben wird. Das so vorbereitete optische Kabel 14 wird dann gemäss Fig. 1d mit dem freigelegten und gereinigten Lichtwellenleiter 15 in einen Behälter 17 mit einem pulverförmigen Klebstoff 18 eingetaucht und anschliessend wieder herausgezogen. Durch elektrostatische Aufladung oder Adhäsionskräfte bedingt bleiben beim Herausziehen des Lichtwellenleiters 15 aus dem Klebstoff 18 einzelne Partikel 19 des Klebstoffs 18 an der Oberfläche des Lichtwellenleiters hängen (Fig. 1e) und bilden so einen Klebstoffvorrat von wenigen (ca. 2-5) mg, der zusammen mit dem Lichtwellenleiter 15 zum Aufnahmekörper 11 herübertransportiert und dort zur Verklebung beider Teile verwendet werden kann.

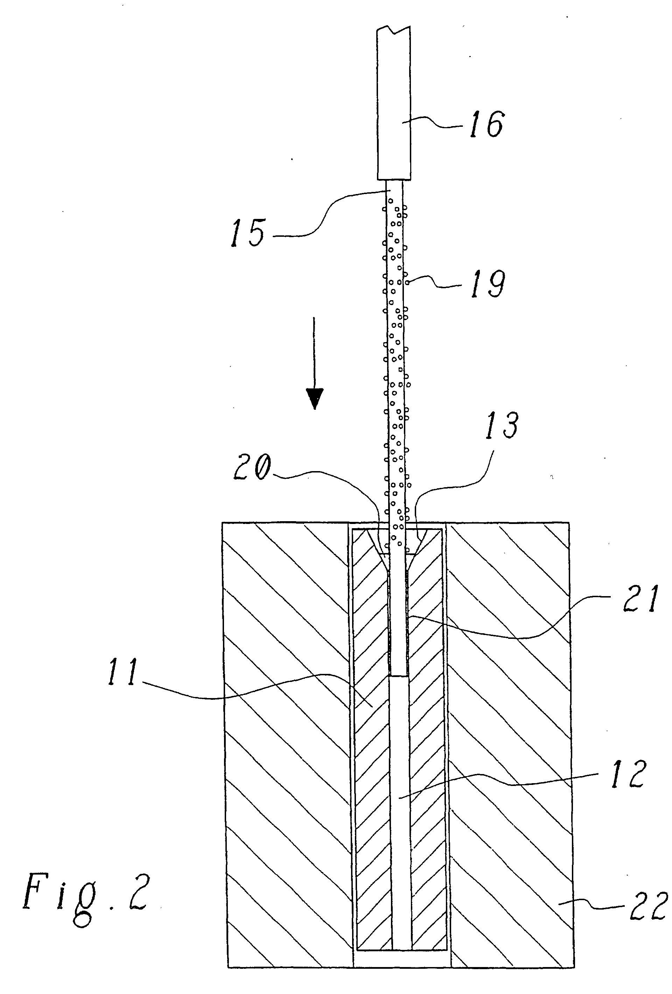

Der pulverförmige Klebstoff 18 ist ein fester Reaktionsklebstoff, welcher bei einer Schmelztemperatur deutlich oberhalb der Zimmertemperatur aufschmilzt und im aufgeschmolzenen Zustand zu einer temperaturbeständigen (duroplastischen) Verbindung vernetzt. Damit das Aufschmelzen und die damit einhergehende Reaktion vor sich gehen kann, wird der Aufnahmekörper 11 gemäss Fig. 2 in eine Aufheizvorrichtung 22 eingesetzt. Die Aufheizvorrichtung 22 im dargestellten Beispiel besteht einfacherweise aus einem Block aus einem Material mit guter Wärmeleitfähigkeit, welcher eine Bohrung zur Aufnahme des Aufnahmekörpers 11 aufweist und durch (nicht dargestellte) Heizmittel, z.B. eine elektrische Widerstandsheizung, durch eine Flamme oder dgl., kontrolliert auf eine bestimmte vorgegebene Temperatur aufgeheizt werden kann. Es ist jedoch auch denkbar, anstelle eines aufheizbaren Blockes z.B. eine berührungslos mit Wärmestrahlung arbeitende Vorrichtung zu verwenden.

Sobald die Aufheizvorrichtung 22 (ablesbar durch einen Temperaturfühler oder dgl.) die vorgegebene Temperatur erreicht hat, wird der Lichtwellenleiter 15 mit den anhaftenden Klebstoffpartikeln 19 durch die trichterförmige Oeffnung 13 in die Bohrung 12 des aufgeheizten Aufnahmekörpers 11 langsam eingeführt. Die Klebstoffpartikel 19 werden beim Eintauchen des Lichtwellenleiters 15 in die Bohrung sukzessive abgestreift, berühren die heisse Wand der trichterförmigen Oeffnung, schmelzen auf und bilden in dem Trichter ein Schmelzbad 20 aus aufgeschmolzenem Klebstoff. Dieser Aufschmelzvorgang kann optisch vom Anwender leicht kontrolliert werden, wenn dem Klebstoff Farbpigmente beigemischt werden, die dem verflüssigten Klebstoff eine einheitliche (z.B. rote) Farbe verleihen.

Durch das sich ständig wieder auffüllende Schmelzbad 20 hindurch wird der Lichtwellenleiter 15 in die Bohrung 12 eingeführt, wobei flüssiger Klebstoff aus dem Schmelzbad 20 sowohl durch den Lichtwellenleiter 15 als auch durch Kapillarkräfte in den Ringspalt 21 zwischen dem Lichtwellenleiter 15 und der Innenwand der Bohrung 12 gelangt und diesen soweit ausfüllt, wie der Lichtwellenleiter 15 gerade in die Bohrung 12 hineinreicht. Der Ringspalt 21 (der Klebespalt) hat üblicherweise eine Spaltbreite von 0,001 bis 0,004 mm (die Durchmesserdifferenz von Lichtwellenleiter 15 und Bohrung 12 beträgt das Doppelte). Der aufgeschmolzene Klebstoff 18 muss daher bei der Verarbeitungstemperatur (bis zu 150°C) eine ausreichend niedrige Viskosität aufweisen, um den Ringspalt 21 sicher ausfüllen zu können. Bevorzugt wird daher ein Klebstoff 18 verwendet, der im aufgeschmolzenen (noch nicht vernetzten) Zustand eine Viskosität kleiner gleich 500 mPa.s aufweist.

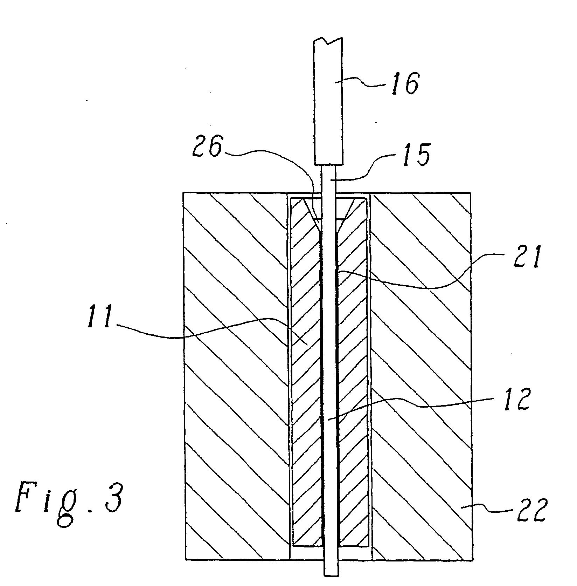

Die Vernetzung (Aushärtung) des aufgeschmolzenen Reaktionsklebstoffs wird vorzugsweise so eingestellt, dass sich eine kurze Reaktionszeit, vorzugsweise zwischen 10 und 20 Sekunden, insbesondere etwa 15 Sekunden, ergibt. Diese Zeit ist vollkommen ausreichend, um den Lichtwellenleiter 15 unter Aufschmelzen der anhaftenden Klebstoffpartikel 19 in die Bohrung 12 des Aufnahmekörpers 11 vollständig einzuführen, so dass er gemäss Fig. 3 mit einem kurzen Ende auf der anderen Seite der Bohrung 12 herausschaut. Das schnelle Vernetzen verhindert ein versehentliches Herausziehen des Lichtwellenleiters 15 und erlaubt eine sofortige Weiterverarbeitung der verklebten Teile. So ist es möglich, schon wenige Minuten nach dem Einführen des Lichtwellenleiters 15 den Aufnahmekörper 11 aus der Aufheizvorrichtung 22 herauszunehmen und das auf der andere Seite herausstehende Ende des Lichtwellenleiters 15 abzutrennen und damit die für die spätere einwandfreie Funktion des optischen Verbinders notwendige Faserendfläche herzustellen, so dass die Faser in der Bohrung zentriert wird und aufgrund der nur kurzen Flüssigkeitsphase des Klebstoffes nicht durch die Kapillarwirkung an die Bohrungswand gezogen wird. Durch Wärmeleitung in der Faser wird der anhaftende Klebstoff 19 auch auf dem sich ausserhalb der Bohrung befindlichen Lichtwellenleiter 15 aufschmelzen und kann so das zuvor entfernte Coating (Umhüllung 16) ersetzen, so dass der Lichtwellenleiter 15 vor der trichterförmigen Oeffnung nicht ungeschützt bleibt.

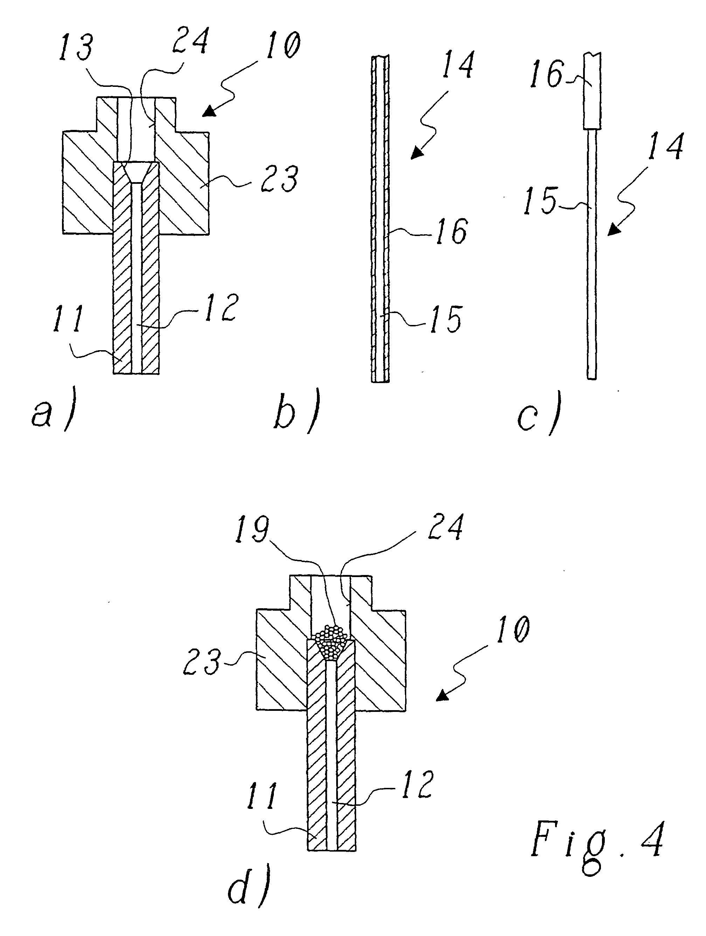

Anstelle des in Fig. 1 bis 3 dargestellten Verfahrens, bei dem die Klebstoffpartikel 19 am Lichtwellenleiter 15 haftend in den erwärmten Aufnahmekörper 11 eingeführt werden, kann im Rahmen der Erfindung auch ein Verfahren gewählt werden, wie es in den Fig. 4a-d, 5 und 6 wiedergegeben ist. Es wird dabei von demselben Aufnahmekörper 11 ausgegangen (Fig. 4a), der in diesem Fall mit dem Ende, welches die trichterförmige Oeffnung 13 aufweist, in einer kappenförmigen Halterung 23 steckt. Die Halterung 23 umgibt die trichterförmige Oeffnung 13 mit einer Bohrung 24, durch welche der freigelegte Lichtwellenleiter 15 (Fig. 4b,c) des optischen Kabels 14 in die Bohrung 12 des Aufnahmekörpers 11 eingeführt werden kann. die trichterförmige Oeffnung 13 wird nun (Fig. 4) in ausreichender Menge mit Partikeln 19 des pulverförmigen Reaktionsklebstoffs gefüllt. Die Bohrung 24 ermöglicht dabei ein Auffüllen der Oeffnung über die Oberkante hinaus. Das Einfüllen des Klebstoffs kann dabei direkt am Ort der Montage vorgenommen werden, kann aber auch im Rahmen einer werksseitigen Vorkonfektionierung erfolgen. Im letzeren Fall ist es zweckmässig, die gefüllte Oeffnung mit einer Schutzmembran zu verschliessen, damit der Klebstoff bei einem späteren Transport nicht herausfallen kann.

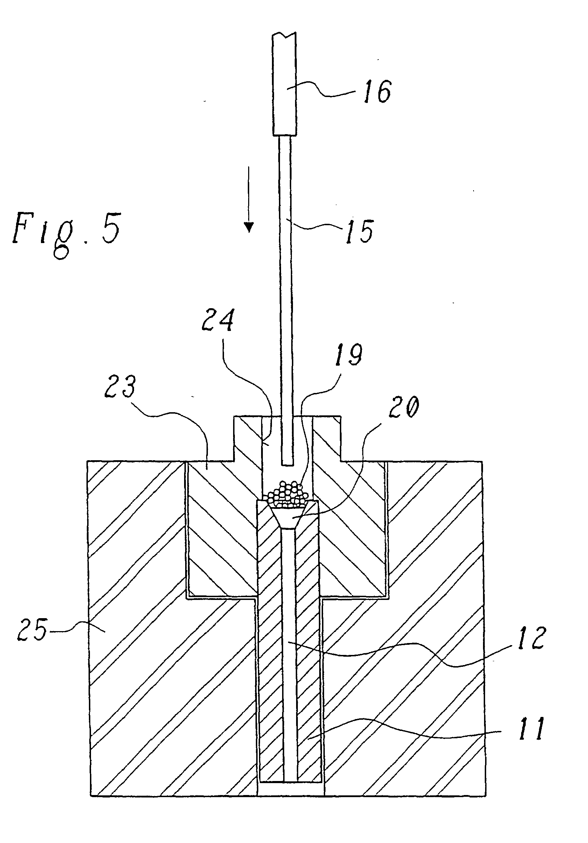

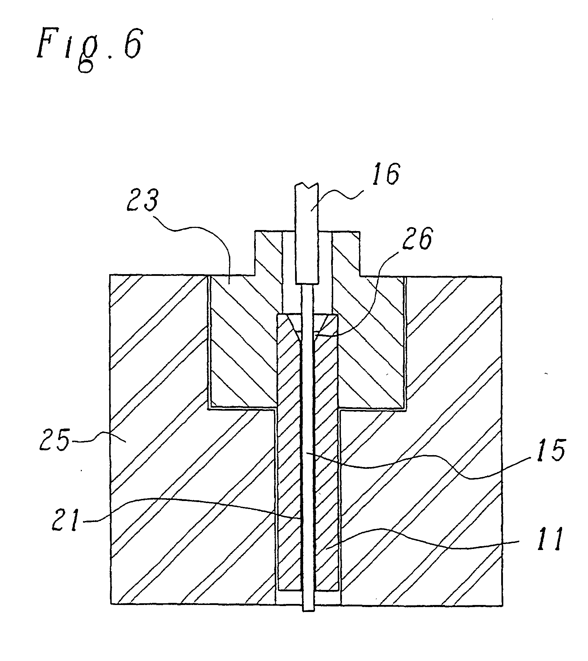

Der so vorbereitete Aufnahmekörper 11 kann dann gemäss Fig. 5 in eine entsprechend ausgebildete Aufheizvorrichtung 25 eingesetzt und bis zum Schmelzpunkt des Klebstoffs aufgeheizt werden. Sobald sich - aufgrund der dem Klebstoff beigemischten Pigmente erkennbar - im unteren Bereich der trichterförmigen Oeffnung 13 ein Schmelzbad 20 aus geschmolzenem Klebstoff gebildet hat, wird der (gereinigte) Lichtwellenleiter 15 zügig in die Bohrung 12 des Aufnahmekörpers 11 eingeführt und nimmt dabei - wie bereits oben beschrieben, den flüssigen Klebstoff mit in den Ringspalt 21 zwischen Bohrung 11 und Lichtwellenleiter 15, wo er vernetzt und die Verklebung bewirkt (Fig. 6). Nach wenigen Minuten kann der Aufnahmekörper 11 mit dem Lichtwellenleiter 15 aus der Aufheizvorrichtung 25 entnommen und das überstehende Ende des Lichtwellenleiters 15 optisch bearbeitet (geschliffen) werden.

Das erfindungsgemässe Verfahren stellt vergleichsweise hohe Anforderungen an den eingesetzten Klebstoff. Diese Anforderungen lassen sich in dem folgenden Anforderungsprofil zusammenfassen:

| | |
|---|---|
| Zu verklebende Materialien | Keramik-Glas |
| Reaktionszeit | 10-15 s |
| Viskosität bei Verarbeitung | max. 500 mPa.s |
| Festigkeit | > Bruchfestigkeit LWL |
| Endfestigkeit | nach 20 s |
| Klebspalt | 0,001-0,004 mm |
| Alterungsverhalten | nach 500 h bei Raumtemperatur (RT) Zuglast 5 N ohne Dämpfungsveränderung |
| Lagerstabilität | min. 5 h bei 70°C; > 2 Jahre bei RT |
| Lagertemperatur | -25°C bis +70°C |
| Verarbeitungstemperatur | max. 150°C |
| Einsatztemperatur nach Verarbeitung | -10°C bis +85°C |
| Einsatzmenge | 2-10 mg |

Als Klebstoff 18 für das Verfahren wird, um dieses Anforderungsprofil zu erfüllen, ein zweikomponentiger Reaktionsklebstoff verwendet, der im wesentlichen aus einem festen, vorzugsweise einem kristallinen, Harz besteht, und dem ein festes Hilfsmittel für die Vernetzung zugefügt ist. Das feste Harz ist dabei vorzugsweise aus der Gruppe der ungesättigten Polyesterharze, der festen Acrylatharze, der Methacrylatfestharze und der Epoxidfestharze ausgewählt. Als Vernetzungs-Hilfsmittel wird für die Polyester-, Acrylat- und Methacrylatharze ein Peroxid, bzw. für die Epoxidharze ein Aminaddukt verwendet. Insbesondere wird als Peroxid ein (1.1-Di(tert.Butylperoxyd)3.3.5-Trimethylcyclohexan 40% auf Kreide) verwendet. Der Klebstoff liegt in Pulverform vor. Dem pulverförmigen Klebstoff ist ein Trennmittel, vorzugsweise in Form einer kolloidalen Kieselsäure, zugemischt. Dem pulverförmigen Klebstoff ist weiterhin zur besseren Ueberwachung des Klebevorgangs ein Pigment, vorzugsweise ein rotes Eisenoxyd, zugemischt. Die Pulverform der Mischung wird beispielsweise dadurch erreicht, dass das feste Harz mit der kolloidalen Kieselsäure und dem Pigment während 24 h bis 48 h in einer Kugelmühle gemahlen und anschliessend das Mahlgut von den Kugeln getrennt und abgefüllt wird. Bei der Mahlung des Harzes wird das Harz elektrostatisch aufgeladen, wodurch zumindest teilweise die Haftung des Pulvers an dem Lichtwellenleiter bedingt ist. Eine beispielhafte Korngrössenverteilung des gemahlenen Pulvers hat Korngrössen zwischen 0,3 und einigen 100 µm mit einem Maximum im Bereich zwischen 6 und 50 µm.

### Beispiel 1:

Für den Klebstoff wird als ungesättigtes Polyesterharz ein Polyesterharz auf Terephtalsäurebasis verwendet. Der Klebstoff hat folgende Zusammensetzung:

| | |
|---|---|
| Synolite 1835 (Terephtalsäurebasis) Smpkt. ca. 110°C, Visk. bei 165°C 450-500 mPa.s Hersteller: DSM | ca. 89,0 % |
| Interox TMCH-40-ic (1.1-Di(tert.Butylperoxyd)3.3.5-Trimethylcyclohexan 40% auf Kreide) Hersteller: Laporte | ca. 6,0 % |
| Aerosil 200 (kolloidale Kieselsäure) Hersteller: Degussa | ca. 3,5 % |
| Bayferrox 720 N rot (Eisenoxyd rot) Hersteller: Bayer | ca. 1,5 % |

### Beispiel 2:

Für den Klebstoff wird als festes Harz eine Mischung aus Methacrylamid und Bisphenol A-Dimethacrylat verwendet. Der Klebstoff hat folgende Zusammensetzung:

| | |
|---|---|
| Methacrylamid Smpkt. 110°C | ca. 80,0 % |
| Bisphenol A-Dimenthacrylat Smpkt. 70°C Hersteller: Röhm | ca. 9,0 % |
| Interox TMCH-40-ic (1.1-Di(tert.Butylperoxyd)3.3.5-Trimethylcyclohexan 40% auf Kreide) Hersteller: Laporte | ca. 6,0 % |
| Aerosil 200 (kolloidale Kieselsäure) Hersteller: Degussa | ca. 3,5 % |
| Bayferrox 720 N rot (Eisenoxyd rot) Hersteller: Bayer | ca. 1,5 % |

### Beispiel 3:

Für den Klebstoff wird als festes Harz ein Epoxidharz verwendet. Der Klebstoff hat folgende Zusammensetzung:

| | |
|---|---|
| Eurepox 7004 (EP-Aq 925) Hersteller: Witco | 50-70 % |
| Epoxid-Addukt (Bekopox 140, 4 Gew.Te.) H ersteller: Hoechst TETA (3 Gew.Te.) Hersteller: Bayer | 20-40 % |
| Aerosil 200 (kolloidale Kieselsäure) Hersteller: Degussa | 5-10 % |
| Bayferrox 720 N rot (Eisenoxyd rot) Hersteller: Bayer | ca. 1,5 % |

Es versteht sich von selbst, dass im Rahmen der Erfindung und ausgehend von den angegebenen beispielhaften Zusammensetzungen auch andere Komponenten und Zusammensetzungen gewählt werden können, um im Verfahren nach der Erfindung die gewünschte Klebung sicher und schnell ausführen zu können.

Die bisher erläuterten Ausführungsbeispiele haben sich alle auf eine Verfahren bezogen, bei dem der Klebstoff durch Erwärmung geschmolzen und so in den reaktiven flüssigen Zustand überführt wird. Es ist aber im Rahmen der Erfindung gleichermassen auch möglich, dass der Klebstoff ohne Erwärmung nur durch Hinzufügen eines Lösungsmittels in den flüssigen Zustand überführt wird. Die einzelnen, im flüssigen Zustand miteinander reagierenden Komponenten des Klebstoffs gehen dann in Lösung, worauf die Vernetzung des Klebstoffs beginnt. Auch in diesem Fall kann die Verklebung auf unterschiedliche Weise durchgeführt werden.

Bei einem ersten bevorzugten Ausführungsbeispiel dieser Verfahrensvariante wird in gleicher Weise vorgegangen, wie dies für den Fall des Aufschmelzens in Fig. 4 bis 6 analog wiedergegeben ist: Der Klebstoff wird im festen, unvernetzten Zustand in Form der Partikel 19 auf den Aufnahmekörper 11 aufgebracht, insbesondere in die trichterförmige Oeffnung 13 eingefüllt (Fig. 4d). Der auf den Aufnahmekörper 11 aufgebrachte Klebstoff (19) wird dann durch gezieltes und dosiertes Hinzufügen des Lösungsmittels - beispielsweise Toluol oder dgl. - in den flüssigen (gelösten) Zustand überführt (anstelle des Schmelzbades 20 in Fig. 5 bildet sich dabei eine Lösung des Klebstoffs). Der Lichtwellenleiter 15 wird dann in Anwesenheit des gelösten Klebstoffs in die Bohrung 12 des Aufnahmekörpers 11 eingesteckt, wobei der gelöste, vernetzende Klebstoff mit in den Ringspalt 21 zwischen Lichtwellenleiter 15 und Bohrung 12 eingebracht wird und dort aushärtet. Der Klebstoff kann dabei pulverförmig sein, kann aber auch eine andere feste Form (z.B. als Pressling) aufweisen.

Ein zweites bevorzugtes Ausführungsbeispiel dieser Verfahrensvariante setzt voraus, dass ein pulverförmiger Klebstoff verwendet wird. In diesem Fall wird - analog zu den Darstellungen in Fig. 1 bis 3 - zunächst der Lichtwellenleiter 15 mit seinem einen Ende in das Lösungsmittel eingetaucht. Anschliessend wird der Lichtwellenleiter 15 (wie in Fig. 1d,e gezeigt) mit seinem einen Ende in den pulverförmigen Klebstoff 18 eingetaucht und aus dem pulverförmigen Klebstoff 18 wieder herausgezogen, wobei Partikel 19 des pulverförmigen Klebstoffs 18 an der mit dem Lösungsmittel benetzten Oberfläche des Lichtwellenleiters 15 haften bleiben. Während die anhaftenden Partikel 19 auf dem Lichtwellenleiter 15 in Lösung gehen und der Klebstoff reagiert, wird der Lichtwellenleiter 15 in die Bohrung 12 des Aufnahmekörpers 11 eingeführt (analog Fig. 2,3) und dort verklebt. Als geeigneter Klebstoff kommt in beiden Fällen derselbe Klebstoff in Betracht, wie er weiter oben im Zusammenhang mit dem Aufschmelzverfahren detailliert beschrieben worden ist, nämlich ein zweikomponentiger Reaktionsklebstoff, der im wesentlichen aus einem festen, vorzugsweise einem kristallinen, Harz besteht, dem ein festes Hilfsmittel für die Vernetzung zugefügt ist, wobei das feste Harz aus der Gruppe der ungesättigten Polyesterharze, der festen Acrylatharze, der Methacrylatfestharze und der Epoxidfestharze ausgewählt ist, und als Vernetzungs-Hilfsmittel für die Polyester-, Acrylat- und Methacrylatharze ein Peroxid, bzw. für die Epoxidharze ein Amin-Addukt verwendet wird.

Insgesamt ergibt sich mit der Erfindung ein Klebeverfahren für optische Steckverbinder, dass einfach vor Ort anzuwenden ist, wenig Aufwand und geringe Vorarbeiten erfordert, die Lagerhaltung vereinfacht, und zu sicheren Klebungen mit hoher Langzeitstabilität führt.

### BEZEICHNUNGSLISTE

- 10: Verbinder
- 11: Aufnahmekörper
- 12: Bohrung
- 13: trichterförmige Oeffnung
- 14: optisches Kabel
- 15: Lichtwellenleiter
- 16: Umhüllung
- 17: Behälter
- 18: Klebstoff (pulverförmig)
- 19: Partikel (Klebstoff)
- 20: Schmelzbad (Klebstoff)
- 21: Ringspalt (Bohrung-Lichtwellenleiter)
- 22,25: Aufheizvorrichtung
- 23: Halterung
- 24: Bohrung (Halterung)
- 26: Klebstoff (ausgehärtet)

## Patentansprüche

1. Verfahren zum Befestigen eines Lichtwellenleiters (15) in einem Verbinder (10) für eine optische Steckverbindung, welcher Verbinder (10) einen Aufnahmekörper (11) mit einer Bohrung (12) zur Aufnahme des Lichtwellenleiters (15) umfasst, bei welchem Verfahren der Lichtwellenleiter (15) in die Bohrung (12) des Aufnahmekörpers (11) gesteckt und in der Bohrung (12) durch Verkleben mit einem Klebstoff (18, 19, 26) fixiert wird, und wobei ein fester Reaktionsklebstoff (18, 19) verwendet wird, welcher durch Ueberführen in einen flüssigen Zustand zur Reaktion gebracht wird und zu einer temperaturbeständigen Verbindung vernetzt, **dadurch gekennzeichnet, dass** ein pulverförmiger Klebstoff (18) verwendet wird, dass der Lichtwellenleiter (15) mit seinem einen Ende in den pulverförmigen Klebstoff (18) eingetaucht wird, dass der Lichtwellenleiter (15) aus dem pulverförmigen Klebstoff (18) wieder herausgezogen wird, wobei Partikel (19) des pulverförmigen Klebstoffs (18) an der Oberfläche des Lichtwellenleiters (15) haften bleiben, und dass der Lichtwellenleiter (15) mit den anhaftenden Partikeln (19) in die Bohrung (12) des Aufnahmekörpers (11) eingeführt wird.

2. Verfahren nach Anspruch 1, **dadurch gekennzeichnet, dass** der Klebstoff (18, 19) durch Aufschmelzen in den flüssigen Zustand überführt wird, dass der Aufnahmekörper (11) auf eine Temperatur gebracht und gehalten wird, welche grösser oder gleich der Schmelztemperatur des Klebstoffs (14) ist, und dass der Lichtwellenleiter (15) mit den anhaftenden Partikeln (19) in die Bohrung (12) des aufgeheizten Aufnahmekörpers (11) eingeführt wird.

3. Verfahren nach Anspruch 1, **dadurch gekennzeichnet, dass** der Klebstoff (18, 19) durch Hinzufügen eines Lösungsmittels in den flüssigen Zustand überführt wird, dass der Lichtwellenleiter (15) mit seinem einen Ende zunächst in das Lösungsmittel eingetaucht wird, und dass der Lichtwellenleiter (15) mit seinem einen Ende anschliessend in den pulverförmigen Klebstoff (18) eingetaucht wird.

4. Verfahren nach einem der Ansprüche 1 bis 3, **dadurch gekennzeichnet, dass** ein Aufnahmekörper (11) mit einer Bohrung (12) verwendet wird, deren Innendurchmesser nur wenig, vorzugsweise etwa 0,002 bis 0,008 mm, grösser ist, als der Aussendurchmesser des Lichtwellenleiters (15).

5. Verfahren nach einem der Ansprüche 1 bis 4, **dadurch gekennzeichnet, dass** ein Aufnahmekörper (11) verwendet wird, welcher aus einer Präzisionskeramik besteht.

6. Verfahren nach einem der Ansprüche 1 bis 5, **dadurch gekennzeichnet, dass** die Oeffnung (13) der Bohrung (12) trichterförmig ausgebildet ist.

7. Verfahren nach einem der Ansprüche 1 bis 6, **dadurch gekennzeichnet, dass** ein Lichtwellenleiter (15) verwendet wird, welcher eine Umhüllung (16) aufweist, dass die Umhüllung (16) vor dem Verkleben auf einer ausreichenden Länge entfernt wird, und dass der freigelegte Lichtwellenleiter (15) nach dem Entfernen der Umhüllung (16) und vor dem Verkleben gereinigt wird.

8. Verfahren nach Anspruch 7, **dadurch gekennzeichnet, dass** die Reinigung mechanisch, vorzugsweise durch Abreiben mit einem Vlies, erfolgt.

9. Verfahren nach einem der Ansprüche 1 bis 8, **dadurch gekennzeichnet, dass** der verwendete Klebstoff (18) im aufgeschmolzenen Zustand eine Viskosität kleiner gleich 500 mPa.s aufweist.

10. Verfahren nach einem der Ansprüche 1 bis 9, **dadurch gekennzeichnet, dass** der verwendete Klebstoff (18) eine kurze Reaktionszeit, vorzugsweise zwischen 10 und 20 Sekunden, insbesondere etwa 15 Sekunden, aufweist.

11. Verfahren nach einem der Ansprüche 1 bis 10, **dadurch gekennzeichnet, dass** der verwendete Klebstoff (18) ein zweikomponentiger Reaktionsklebstoff ist, und dass der Klebstoff (18) im wesentlichen aus einem festen, vorzugsweise einem kristallinen, Harz besteht, dem ein festes Hilfsmittel für die Vernetzung zugefügt ist.

12. Verfahren nach Anspruch 11, **dadurch gekennzeichnet, dass** das feste Harz aus der Gruppe der ungesättigten Polyesterharze, der festen Acrylatharze, der Methacrylatfestharze und der Epoxidfestharze ausgewählt ist, und als Vernetzungs-Hilfsmittel für die Polyester-, Acrylat- und Methacrylatharze ein Peroxid, bzw. für die Epoxidharze ein Amin-Addukt verwendet wird.

13. Verfahren nach Anspruch 12, **dadurch gekennzeichnet, dass** als Peroxid ein (1.1-Di(tert.Butylperoxyd)3.3.5-Trimethylcyclohexan 40% auf Kreide) verwendet wird.

14. Verfahren nach einem der Ansprüche 12 und 13, **dadurch gekennzeichnet, dass** der Klebstoff (18) in Pulverform vorliegt, und dass dem pulverförmigen Klebstoff (18) ein Trennmittel, vorzugsweise in Form einer kolloidalen Kieselsäure, zugemischt ist.

15. Verfahren nach Anspruch 14, **dadurch gekennzeichnet, dass** dem pulverförmigen Klebstoff (18) zur besseren Ueberwachung des Klebevorgangs ein Pigment, vorzugsweise ein rotes Eisenoxyd, zugemischt ist.

16. Verfahren nach Anspruch 12, **dadurch gekennzeichnet, dass** als ungesättigtes Polyesterharz ein Polyesterharz auf Terephtalsäurebasis verwendet wird.

17. Verfahren nach Anspruch 16, **dadurch gekennzeichnet, dass** der Klebstoff zu ca. 89% aus dem Polyesterharz, zu ca. 6% aus 1.1-Di(tert.Butylperoxyd)3.3.5-Trimethylcyclohexan 40% auf Kreide, zu ca. 3,5% aus kolloidaler Kieselsäure und zu ca. 1,5% aus Eisenoxyd zusammengesetzt ist.

18. Verfahren nach Anspruch 12, **dadurch gekennzeichnet, dass** als festes Harz eine Mischung aus Methacrylamid und Bisphenol A-Dimethacrylat verwendet wird.

19. Verfahren nach Anspruch 18, **dadurch gekennzeichnet, dass** der Klebstoff zu ca. 80% aus Methacrylat, zu ca. 9% aus Bisphenol A-Dimethacrylat, zu 6% aus 1.1-Di(tert.Butylperoxyd)3.3.5-Trimethylcyclohexan 40% auf Kreide, zu ca. 3,5% aus kolloidaler Kieselsäure und zu ca. 1,5% aus Eisenoxyd zusammengesetzt ist.

20. Verfahren nach Anspruch 12, **dadurch gekennzeichnet, dass** als festes Harz ein Epoxidharz verwendet wird.

21. Verfahren nach Anspruch 20, **dadurch gekennzeichnet, dass** der Klebstoff zu 50-70% aus dem Epoxidharz, zu 20-40% aus einem Epoxid-Addukt, zu 5-10% aus kolloidaler Kieselsäure und zu ca. 1,5% aus Eisenoxyd zusammengesetzt ist.

## Claims

1. Method for securing an optical waveguide (15) in a connector (10) for an optical plug connection, which connector (10) comprises a receiving body (11) having a bore (12) for receiving the optical waveguide (15), in which method the optical waveguide (15) is plugged into the bore (12) in the receiving body (11) and is fixed in the bore (12) by adhesive bonding using an adhesive (18, 19, 26), a solid reactive adhesive (18, 19), which is made to react by being converted into a liquid state and crosslinks to form a temperature-stable bond, being used, **characterized in that** a pulverulent adhesive (18) is used, **in that** one end of the optical waveguide (15) is dipped into the pulverulent adhesive (18), **in that** the optical waveguide (15) is pulled back out of the pulverulent adhesive (18), particles (19) of the pulverulent adhesive (18) remaining stuck to the surface of the optical waveguide (15), and **in that** the optical waveguide (15) with the adhering particles (19) is introduced into the bore (12) in the receiving body (11).

2. Method according to Claim 1, **characterized in that** the adhesive (18, 19) is converted into the liquid state by melting, **in that** the receiving body (11) is heated to and held at a temperature which is greater than or equal to the melting point of the adhesive (14), and **in that** the optical waveguide (15) with the adhering particles (19) is introduced into the bore (12) in the heated receiving body (11).

3. Method according to Claim 1, **characterized in that** the adhesive (18, 19) is converted into the liquid state by adding a solvent, **in that** one end of the optical waveguide (15) is initially dipped into the solvent, and **in that** this end of the optical waveguide (15) is then dipped into the pulverulent adhesive (18).

4. Method according to one of Claims 1 to 3, **characterized in that** a receiving body (11) with a bore (12) whose internal diameter is only slightly greater, preferably approximately 0.002 to 0.008 mm greater, than the external diameter of the optical waveguide (15) is used.

5. Method according to one of Claims 1 to 4, **characterized in that** a receiving body (11) which consists of a precision ceramic is used.

6. Method according to one of Claims 1 to 5, **characterized in that** the opening (13) of the bore (12) is of funnel-shaped design.

7. Method according to one of Claims 1 to 6, **characterized in that** an optical waveguide (15) which has a sheath (16) is used, **in that** the sheath (16) is removed over a sufficient length prior to the adhesive bonding, and **in that** the uncovered optical waveguide (15) is cleaned after the removal of the sheath (16) and before the adhesive bonding.

8. Method according to Claim 7, **characterized in that** the cleaning is carried out mechanically, preferably by rubbing with a nonwoven.

9. Method according to one of Claims 1 to 8, **characterized in that** the adhesive (18) which is used, in the molten state, has a viscosity of less than or equal to 500 mPa·s.

10. Method according to one of Claims 1 to 9, **characterized in that** the adhesive (18) which is used has a short reaction time, preferably of between 10 and 20 seconds, in particular approximately 15 seconds.

11. Method according to one of Claims 1 to 10, **characterized in that** the adhesive (18) which is used is a two-component reactive adhesive, and **in that** the adhesive (18) substantially comprises a solid, preferably crystalline, resin, to which a solid auxiliary is added for the crosslinking.

12. Method according to Claim 11, **characterized in that** the solid resin is selected from the group consisting of the unsaturated polyester resins, the solid acrylate resins, the solid methacrylate resins and the solid epoxy resins, and the crosslinking auxiliary used for the polyester, acrylate and methacrylate resins is a peroxide, or for the epoxy resins is an amine adduct.

13. Method according to Claim 12, **characterized in that** the peroxide used is a (1,1-di(tert-butyl peroxide)-3,3,5-trimethylcyclohexane 40% on chalk).

14. Method according to one of Claims 12 and 13, **characterized in that** the adhesive (18) is in powder form, and **in that** a parting agent, preferably in the form of a colloidal silica, is admixed to the pulverulent adhesive (18).

15. Method according to Claim 14, **characterized in that**, to allow better monitoring of the adhesion process, a pigment, preferably a red iron oxide, is admixed with the pulverulent adhesive (18).

16. Method according to Claim 12, **characterized in that** the unsaturated polyester resin used is a polyester resin based on terephthalic acid.

17. Method according to Claim 16, **characterized in that** the adhesive is composed of approx. 89% of the polyester resin, approx. 6% of 1,1-di(tert-butyl peroxide)-3,3,5-trimethylcyclohexane 40% on chalk, approx. 3.5% of colloidal silica and approx. 1.5% of iron oxide.

18. Method according to Claim 12, **characterized in that** the solid resin used is a mixture of methacrylamide and bisphenol-A dimethacrylate.

19. Method according to Claim 18, **characterized in that** the adhesive is composed of approx. 80% of methacrylate, approx. 9% of bisphenol-A dimethacrylate, 6% of 1,1-di(tert-butyl peroxide)-3,3,5-trimethylcyclohexane 40% on chalk, approx. 3.5% of colloidal silica and approx. 1.5% of iron oxide.

20. Method according to Claim 12, **characterized in that** the solid resin used is an epoxy resin.

21. Method according to Claim 20, **characterized in that** the adhesive is composed of approximately 50-70% of the epoxy resin, 20-40% of an epoxy adduct, 5-10% of colloidal silica and approx. 1.5% of iron oxide.

## Revendications

1. Procédé de fixation d'un guide d'ondes lumineuses (15) dans un connecteur (10) pour une connexion enfichable optique, lequel connecteur (10) comprend un corps de réception (11) ayant un alésage (12) en vue de la réception du guide d'ondes lumineuses (15), procédé lors duquel le guide d'ondes lumineuses (15) est enfiché dans l'alésage (12) du corps de réception (11) et est fixé dans l'alésage (12) par collage à l'aide d'un adhésif (18, 19, 26), et un adhésif de réaction solide (18, 19), qui est amené à réagir par conversion en un état liquide et est réticulé en un composé résistant à la température, étant utilisé, **caractérisé en ce que** l'on utilise un adhésif pulvérulent (18), **en ce que** le guide d'ondes lumineuses (15) est plongé par une de ses extrémités dans l'adhésif pulvérulent (18), **en ce que** le guide d'ondes lumineuses (15) est à nouveau retiré de l'adhésif pulvérulent (18), des particules d'adhésif pulvérulent (18) restant fixées par adhésion à la surface du guide d'ondes lumineuses (15), et **en ce que** le guide d'ondes lumineuses (15) avec les particules adhérentes (19) est introduit dans l'alésage (12) du corps de réception (11).

2. Procédé selon la revendication 1, **caractérisé en ce que** l'adhésif (18, 19) est converti par fusion à l'état fluide, **en ce que** le corps de réception (11) est amené et maintenu à une température, qui est supérieure ou égale à la température de fusion de l'adhésif (14), et ce que le guide d'ondes lumineuses (15) avec les particules adhérentes est introduit dans l'alésage (12) du corps de réception (11) échauffé.

3. Procédé selon la revendication 1, **caractérisé en ce que** l'adhésif (18, 19) est converti par ajout d'un solvant dans l'état fluide, **en ce que** le guide d'ondes lumineuses (15) est plongé tout d'abord, par une de ses extrémités, dans le solvant et **en ce que** le guide d'ondes lumineuses (15) est plongé ensuite avec son extrémité dans l'adhésif pulvérulent (18).

4. Procédé selon l'une quelconque des revendications 1 à 3, **caractérisé en ce que** l'on utilise un corps de réception (11) ayant un alésage (12), dont le diamètre n'est que de très peu supérieur, de préférence d'environ 0,002 à 0,008 mm au diamètre du guide d'ondes lumineuses (15).

5. Procédé selon l'une quelconque des revendications 1 à 4, **caractérisé en ce que** l'on utilise un corps de réception (11), qui se compose d'une céramique de précision.

6. Procédé selon l'une quelconque des revendications 1 à 5, **caractérisé en ce que** l'ouverture (13) de l'alésage (12) est réalisée sous la forme d'un entonnoir.

7. Procédé selon l'une quelconque des revendications 1 à 6, **caractérisé en ce que** l'on utilise un guide d'ondes lumineuses (15), qui présente une enveloppe (16), **en ce que** l'enveloppe (16) est enlevée avant le collage sur une longueur suffisante et **en ce que** le guide d'ondes lumineuses (15), libéré de l'enveloppe, est nettoyé après l'enlèvement de l'enveloppe (16) et avant le collage.

8. Procédé selon la revendication 7, **caractérisé en ce que** le nettoyage se fait par voie mécanique, de préférence par friction avec un matériau non tissé.

9. Procédé selon l'une quelconque des revendications 1 à 8, **caractérisé en ce que** l'adhésif utilisé (18) présente à l'état fondu une viscosité inférieure à 500 mPa.s.

10. Procédé selon l'une quelconque des revendications 1 à 9, **caractérisé en ce que** l'adhésif (18) présente un temps de réaction court, compris de préférence entre 10 et 20 secondes, en particulier d'environ 15 secondes.

11. Procédé selon l'une quelconque des revendications 1 à 10, **caractérisé en ce que** l'adhésif utilisé (18) est un adhésif de réaction à deux composants et **en ce que** l'adhésif (18) se compose pour l'essentiel d'une résine solide, de préférence cristalline, à laquelle l'on adjoint un adjuvant solide en vue de la réticulation.

12. Procédé selon la revendication 11, **caractérisé en ce que** la résine solide est choisie parmi le groupe des résines de polyester, des résines d'acrylate solides, des résines solides de méthacrylate et des résines solides d'époxyde insaturés, et **en ce que** l'on utilise, en tant qu'adjuvant de réticulation, pour les résines de polyester, d'acrylate et de méthacrylate, un peroxyde, respectivement, pour les résines époxydes, un produit d'addition d'amine.

13. Procédé selon la revendication 12, **caractérisé en ce que** l'on utilise, en tant que peroxyde, un (1.1-di-(tert-butylperoxyde)de 3.3.5-triméthylcyclohexane à raison de 40 % sur de la craie).

14. Procédé selon l'une quelconque des revendications 12 et 13, **caractérisé en ce que** l'adhésif (18) est présent sous forme pulvérulente et **en ce que** l'on mélange, à l'adhésif pulvérulent (18), un agent de séparation, de préférence sous la forme d'un acide silicique colloidal.

15. Procédé selon la revendication 14, **caractérisé en ce que** l'on mélange à l'adhésif pulvérulent (18) en vue de la meilleure surveillance de la procédure de collage, un pigment, de préférence un oxyde de fer rouge.

16. Procédé selon la revendication 12, **caractérisé en ce que** l'on utilise, en tant que résine de polyester insaturé, une résine de polyester à base d'acide téréphtalique.

17. Procédé selon la revendication 16, **caractérisé en ce que** l'adhésif se compose jusqu'à environ 89 % de résine de polyester, environ jusqu'à 6 % à de 1,1-di(tert-butylperoxy)-3,3,5-triméthylcyclohexane, à raison de 40 % sur de la craie, jusqu'à environ 3,5 % d'acide silicique colloïdal et jusqu'à environ 1,5 % d'oxyde de fer.

18. Procédé selon la revendication 12, **caractérisé en ce que** l'on utilise en tant que résine solide un mélange de méthacrylamide et de diméthylacrylate du bisphénol A.

19. Procédé selon la revendication 18, **caractérisé en ce que** l'adhésif se compose jusqu'à environ 80 % de méthacrylate, jusqu'à environ 9 % de diméthacrylate du bisphénol A, jusqu'à 6 % de 1,1-di(tert-butylperoxy)-3,3,5-triméthylcyclohexane à raison de 40 % de craie, jusqu'à 3,5 % d'acide silicique colloïdal et jusqu'à 1,5 % d'oxyde de fer.

20. Procédé selon la revendication 12, **caractérisé en ce que** l'on utilise en tant que résine solide une résine époxyde.

21. Procédé selon la revendication 20, **caractérisé en ce que** l'adhésif se compose jusqu'à 50-70 % de la résine époxyde, jusqu'à 20-40 % d'un produit d'addition époxyde, jusqu'à 5-10 % d'acide silicique colloïdal et jusqu'à 1,5 % d'oxyde de fer.
